# EUROPÄISCHE PATENTANMELDUNG

(11) **EP 1 746 276 A2**
(43) Veröffentlichungstag der Anmeldung: **24.01.2007**
(21) Anmeldenummer: 06116655.9
(22) Anmeldetag: 05.07.2006
(51) Int. Cl.: F02D 41/22, F01N 11/00

(54) **Überwachung von Abgasgrenzwerten**

(30) Priorität: 22.07.2005 DE 102005034247
(71) Anmelder: ROBERT BOSCH GMBH, 70442 Stuttgart (DE)
(72) Erfinder: Berger, Joachim, 73650, Winterbach (DE); Strohmaier, Rainer, 70565, Stuttgart (DE); Kamp, Bernhard, 71640, Ludwigsburg (DE)

(57) **Zusammenfassung**

Die Erfindung betrifft ein Verfahren zur Überwachung eines Abgasgrenzwertes eines Verbrennungsmotors mittels einer Motorsteuerung, wobei die Motorsteuerung mindestens einen Abgassensor aufweist und ein Fehlersignal bei Überschreitung des Abgasgrenzwertes abgegeben wird. Werden die für den gegenwärtigen Fahrzustand vorhergesagten Emissionen mit Hilfe eines Motormodells ermittelt und mit dem Signal des Abgassensors oder einem daraus hergeleiteten Vergleichswert für die Emission verglichen, kann durch die Modellbildung der vorgeschriebenen Fahrzyklus bei der Zertifizierung eines Grenzwertüberwachungssystems berücksichtigt werden und im praktischen Betrieb auch bei untypischen Fahrzuständen ein defektes System sicher erkannt werden, ohne zu falschen Auslösungen von Fehlersignalen zu führen.

## Beschreibung

### Stand der Technik

Die Erfindung betrifft ein Verfahren zur Überwachung eines Abgasgrenzwertes eines Verbrennungsmotors mittels einer Motorsteuerung, wobei die Motorsteuerung mindestens einen Abgassensor aufweist und ein Fehlersignal bei Überschreitung des Abgasgrenzwertes abgegeben wird.

Solch eine Überwachung von Abgasgrenzwerten wird vom Gesetzgeber zunehmend verlangt. Bezogen auf einen standardisierten Fahrzyklus ist eine auf die Fahrstrecke bezogene Masse für einen Schadstoff wie Partikel oder Stickoxid festgelegt, bei deren Überschreitung der Fahrzeugführer auf das Emissionsproblem hingewiesen werden muss. Die Erkennung der Überschreitung muss im praktischen Fahrbetrieb mit beliebigen Fahrzyklen erfolgen, während die Definition eines als intakt beziehungsweise defekt anzusehenden Fahrzeuges nach dem standardisierten Fahrzyklus bewertet wird. Weiterhin erschwert wird die Unterscheidung intakter und defekter Fahrzeuge, da der Unterschied zwischen noch zulässiger Emission und einem als defekt anzusehenden Fahrzeug nur gering ist. So sieht die US-Gesetzgebung vor, dass ein Defekt bei lediglich dem 1,5-fachen des zulässigen Zertifizierungsgrenzwertes für die Abgasgrenzwertüberwachung liegt. Gleichzeitig muss verhindert werden, dass die Überwachung intakte Fahrzeuge in einem Teil der Fahrsituationen als defekt klassifiziert. Aus diesem Grund ist die Verwendung eines festen von der Fahrsituation unabhängigen Grenzwertes kein gangbarer Weg. Wird das Fahrzeug unter Volllast betrieben, können solch hohe Emissionen entstehen, dass ein fester Grenzwert überschritten würde, obwohl das Fahrzeug nach dem Standard-Fahrzyklus als intakt anzusehen ist. Auch der umgekehrte Fall ist bei einer festen Grenze denkbar. Ein defektes Fahrzeug, das durch geeignetes Fahrverhalten mit niedriger Emission betrieben wird, könnte lange unentdeckt bleiben, während es einer behördlichen Überprüfung nicht standhielte.

Es ist Aufgabe der Erfindung, eine Überwachung der Abgasgrenzwerte eines Fahrzeuges mit Verbrennungsmotor zu schaffen, die sowohl bei einem standardisierten Fahrzyklus als auch im praktischen Betrieb eine sichere Unterscheidung von intakten und defekten Fahrzeugen erlaubt.

### Vorteile der Erfindung

Die Aufgabe wird dadurch gelöst, dass die für den gegenwärtigen Fahrzustand vorhergesagten Emissionen mit Hilfe eines Motormodells ermittelt werden und mit dem Signal des Abgassensors oder einem daraus hergeleiteten Vergleichswert für die Emission verglichen werden. Durch die Modellbildung kann der vorgeschriebenen Fahrzyklus bei der Zertifizierung eines Grenzwertüberwachungssystems berücksichtigt werden und im praktischen Betrieb auch bei Fahrzuständen außerhalb des Fahrzyklusses ein defektes System sicher erkannt werden, ohne zu falschen Auslösungen von Fehlersignalen zu führen.

Werden in das Modell in der Motorsteuerung vorhandene und/oder zusätzliche Motormessgrößen und/oder Abgasmesswerte einbezogen, kann die Modellbildung so weit verbessert werden, dass für die in der Praxis auftretenden Fahrzustände die zulässige Emission sicher modelliert werden kann.

Eine besonders einfach zu realisierende Ausführungsform sieht vor, dass für den Vergleich das Verhältnis von gemessener Emission und vorhergesagter Emission gebildet wird und bei Überschreiten eines festgelegten Schwellenwertes das Fehlersignal abgegeben wird oder dass das Verhältnis von vorhergesagter Emission und gemessener Emission gebildet wird und bei Unterschreiten eines festgelegten Schwellenwertes das Fehlersignal abgegeben wird.

Alternativ kann vorgesehen sein, dass für den Vergleich das Verhältnis der Differenz von vorhergesagter Emission und gemessener Emission und der vorhergesagten Emission gebildet wird oder dass das Verhältnis der Differenz von vorhergesagter Emission und gemessener Emission und der gemessenen Emission gebildet wird und dass bei einem negativen Ergebnis unter einer festgelegten Grenze das Fehlersignal abgegeben wird.

Werden als Emission die Größen Massenstrom einer Abgaskomponente, Konzentration einer Abgaskomponente, Teilchenstrom einer Abgaskomponente, in einem bestimmten Zeitraum emittierte Masse einer Abgaskomponente oder eine in einem bestimmten Zeitraum emittierte Teilchenzahl einer Abgaskomponente verwendet, kann der modellierte Grenzwert mit Emissionswerten verglichen werden, die von handelsüblichen im Fahrzeugbau gängigen Sensoren ermittelt werden können.

Wird erst nach mehrmaligem Vergleich mit dem Ergebnis, dass der zulässige Grenzwert überschritten ist, ein Fehlersignal ausgelöst, kann die fälschliche Auslösung von Fehlersignalen vermindert werden.

Ebenso kann die Genauigkeit der Erkennung eines defekten Fahrzeuges bei gleichzeitiger Vermeidung von Fehlauslösungen des Systems verbessert werden, indem die berechnete Emission und / oder die gemessene Emission über einen festgelegten Zeitraum gemittelt werden, da hierdurch kurzfristige Schwankungen der Emission ausgeglichen werden.

Zur sicheren Unterscheidung von intakten und defekten Fahrzeugen kann vorgesehen sein, dass die Berechnung des Abgasgrenzwertes und der Vergleich mit dem Signal des Abgassensors nur in Betriebspunkten des Verbrennungsmotors durchgeführt wird, in denen eine besonders genaue Berechnung des Abgasgrenzwertes oder eine besonders genaue Messung durch den Abgassensor ermöglicht wird.

Fehlauslösungen in besonderen Fahrsituationen können vermindert werden, indem bei der Mittelwertbildung Werte in Betriebspunkten des Verbrennungsmotors, in denen eine besonders genaue Berechnung des Abgasgrenzwertes oder eine besonders genaue Messung durch den Abgassensor möglich sind, stärker gewichtet werden.

Das Verfahren kann auf die Verwendung von sammelnden Abgassensoren wie Rußsensoren ausgedehnt werden, indem bei Einsatz eines sammelnden Prinzips für den Abgassensor die berechnete Emission mit einem Abgasvolumenstrom multipliziert und integriert wird.

In einer Weiterbildung des Verfahrens kann es vorgesehen sein, dass eine Überwachung einzelner Komponenten eines Abgasnachbehandlungssystems durchgeführt wird, indem ein Signal eines Abgassensors, der im Abgasstrom vor der Komponente des Abgasnachbehandlungssystems angeordnet ist mit dem Signal eines zweiten Abgassensors nach der Komponente verglichen wird und dass bei einer ungenügenden Funktion der Komponente das Fehlersignal abgegeben wird.

Eine Überwachung der Funktion des Abgassensors wird ermöglicht, indem aus dem Vergleich von berechneter Emission und gemessener Emission auf eine Fehlfunktion des Abgassensors geschlossen wird und das Fehlersignal abgegeben wird.

### Zeichnung

Die Erfindung wird im Folgenden anhand der in den Figuren dargestellten Ausführungsbeispiele näher erläutert. Es zeigen:
- Figur 1: eine Grenzwertüberwachung für einen Abgassensor,
- Figur 2: die Grenzwertüberwachung für einen sammelnden Schwellwertschalter,
- Figur 3: die Grenzwertüberwachung für den Abgassensor mit Ermittlung der aufgesammelten Masse,

### Beschreibung der Ausführungsbeispiele

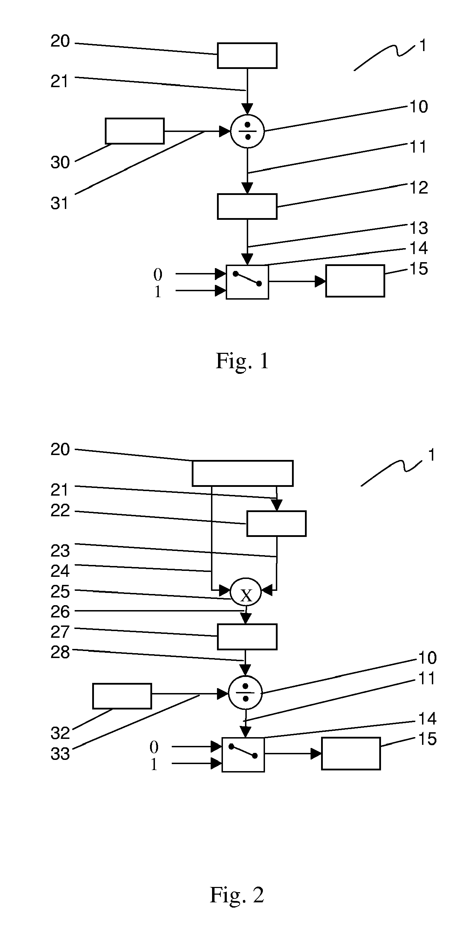

Figur 1 zeigt die erfindungsgemäße Ausführung einer Überwachung 1 für Abgasgrenzwerte. Aus einem Motormodell 20 wird eine vorhergesagte Emission 21 hergeleitet, die der Emission eines intakten Fahrzeuges in dieser Fahrsituation entspricht. Ein Abgassensor 30 gibt ein Signal über die gemessene Emission 31 ab. Dies kann beispielsweise die Konzentration von Stickoxid oder der Teilchenstrom einer Abgaskomponente wie Rußpartikel sein. Aus der vorhergesagten Emission 21 und der gemessenen Emission 31 wird in der Vergleichsstufe der Emissionsgrad 11 gebildet. Dieser kann beispielsweise aus dem Verhältnis von gemessener Emission 31 und vorhergesagter Emission 21 gebildet werden. In einer Mittelungsstufe 12 kann der Emissionsgrad 11 über einen gewissen Zeitraum zum gemittelten Emissionsgrad 13 gemittelt werden, um kurzfristige Schwankungen auszugleichen. Ein Schwellwertschalter 14 erzeugt ein Fehlersignal 15, falls ein voreingestellter Grenzwert für den Emissionsgrad 11 beziehungsweise den gemittelten Emissionsgrad 13 überschritten wird. Mittels des Fehlersignals 15 kann eine Anzeige "malfunction indicator lamp" eingeschaltet werden, die den Fahrzeugführer von der Überschreitung der zulässigen Emission in Kenntnis setzt.

Alternativ kann die Vergleichsstufe 10 den Emissionsgrad 11 aus dem Verhältnis von gemessener Emission 31 und vorhergesagter Emission 21 bilden und bei Überschreiten eines festgelegten Schwellenwertes das Fehlersignal 15 abgeben. In einer weiteren Ausführungsform wird das Verhältnis von vorhergesagter Emission 21 und gemessener Emission 31 gebildet wird und bei Unterschreiten eines festgelegten Schwellenwertes das Fehlersignal 15 abgegeben. Geeignet zur Bildung des Emissionsgrades 11 ist auch die Bildung des Verhältnisses der Differenz von vorhergesagter Emission 21 und gemessener Emission 31 und der vorhergesagten Emission 21 oder die Bildung des Verhältnisses der Differenz von vorhergesagter Emission 21 und gemessener Emission 31 und der gemessenen Emission 31. In dieser Ausführung wird bei einem negativen Ergebnis unter einer festgelegten Grenze das Fehlersignal 15 abgegeben.

Figur 2 zeigt die Überwachung 1 bei Verwendung eines sammelnden Sensors 32, wie er beispielsweise bei der Detektion von Rußpartikeln verwendet wird. Aus dem Motormodell 20 wird die vorhergesagte Emission 21 gebildet, aus der in der Grenzwertberechnung 22 der vorhergesagte Grenzwert 23 gebildet wird. In dieser Stufe wird berücksichtigt, dass die US-Gesetzgebung vorsieht, dass der zulässige Grenzwert das 1,5-fache des Zertifizierungs-Grenzwertes beträgt. Zur Bildung eines vorhergesagten Massenstromes 26 wird der vorhergesagte Grenzwert 23 mit einem Abgasvolumenstrom 24 aus dem Motormodell 20 in einer Multiplizierstufe 25 multipliziert. Der vorhergesagte Massenstrom 26 wird in der Integratorstufe 27 zu einer vorhergesagten Masse 28 integriert. In der Vergleichsstufe 10 wird die vorhergesagte Masse 28 mit einer gemessenen Masse 33 des sammelnden Sensors 32 verglichen. Wird im Schwellwertschalter 14 eine Grenzwertüberschreitung festgestellt, wird das Fehlersignal 15 ausgelöst.

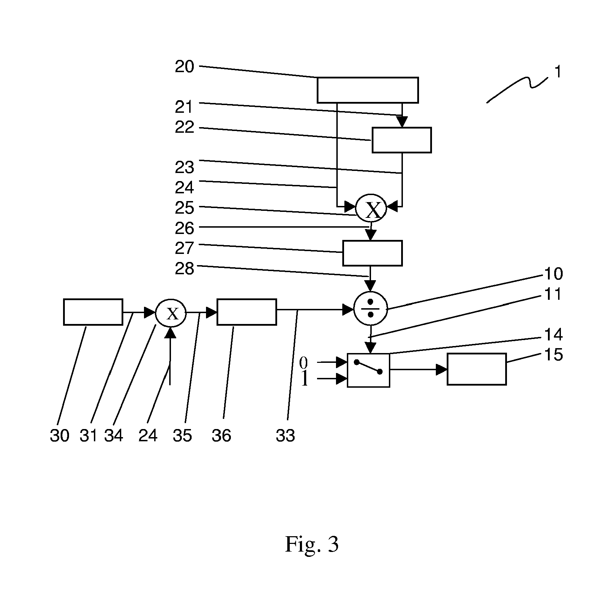

Figur 3 zeigt die Ausführungsform der Überwachung 1, bei der die gemessene Emission 31 des für den Massenstrom sensitiven Sensors 30 zum Vergleich mit der vorhergesagten Masse 28 verwendet wird. Die gemessene Emission 31 wird in einem Multiplizierer 34 mit dem Abgasvolumenstrom 24 zum gemessenen Massenstrom 35 multipliziert. Aus dem gemessenen Massenstrom 35 bildet eine Integratorstufe 36 die gemessene Masse 33. Die gemessene Masse 33 wird in der Vergleichsstufe 10 mit der vorhergesagten Masse 28 verglichen, die wie in Figur 2 dargestellt gebildet wird. Der so gebildete Emissionsgrad 11 wird vom Schwellwertschalter bewertet, der bei Vorliegen einer Überschreitung des Grenzwertes das Fehlersignal 15 auslösen kann.

## Patentansprüche

1. Verfahren zur Überwachung eines Abgasgrenzwertes eines Verbrennungsmotors mittels einer Motorsteuerung, wobei die Motorsteuerung mindestens einen Abgassensor (30) aufweist und ein Fehlersignal (15) bei Überschreitung des Abgasgrenzwertes abgegeben wird, **dadurch gekennzeichnet, dass** die für den gegenwärtigen Fahrzustand vorhergesagten Emissionen (21) mit Hilfe eines Motormodells (20) ermittelt werden und mit dem Signal des Abgassensors (30) oder einem daraus hergeleiteten Vergleichswert für die Emission verglichen werden.

2. Verfahren nach Anspruch 1, **dadurch gekennzeichnet, dass** in das Modell in der Motorsteuerung vorhandene und/oder zusätzliche Motormessgrößen und/oder Abgasmesswerte einbezogen werden.

3. Verfahren nach Anspruch 1, **dadurch gekennzeichnet, dass** für den Vergleich das Verhältnis von gemessener Emission (31) und vorhergesagter Emission (21) gebildet wird und bei Überschreiten eines festgelegten Schwellenwertes das Fehlersignal (15) abgegeben wird oder dass das Verhältnis von vorhergesagter Emission (21) und gemessener Emission (31) gebildet wird und bei Unterschreiten eines festgelegten Schwellenwertes das Fehlersignal (15) abgegeben wird.

4. Verfahren nach Anspruch 1, **dadurch gekennzeichnet, dass** für den Vergleich das Verhältnis der Differenz von vorhergesagter Emission (21) und gemessener Emission (31) und der vorhergesagten Emission (21) gebildet wird oder dass das Verhältnis der Differenz von vorhergesagter Emission (21) und gemessener Emission (31) und der gemessenen Emission (31) gebildet wird und dass bei einem negativen Ergebnis unter einer festgelegten Grenze das Fehlersignal (15) abgegeben wird.

5. Verfahren nach einem der Ansprüche 1 bis 4, **dadurch gekennzeichnet, dass** als Emission die Größen Massenstrom einer Abgaskomponente, Konzentration einer Abgaskomponente, Teilchenstrom einer Abgaskomponente, in einem bestimmten Zeitraum emittierte Masse einer Abgaskomponente oder eine in einem bestimmten Zeitraum emittierte Teilchenzahl einer Abgaskomponente verwendet werden.

6. Verfahren nach einem der Ansprüche 1 bis 5, **dadurch gekennzeichnet, dass** erst nach mehrmaligem Vergleich mit dem Ergebnis, dass der zulässige Grenzwert überschritten ist, ein Fehlersignal (15) ausgelöst wird.

7. Verfahren nach einem der Ansprüche 1 bis 6, **dadurch gekennzeichnet, dass** die berechnete Emission (21) und / oder die gemessene Emission (31) über einen festgelegten Zeitraum gemittelt werden.

8. Verfahren nach einem der Ansprüche 1 bis 6, **dadurch gekennzeichnet, dass** die Berechnung des Abgasgrenzwertes und der Vergleich mit dem Signal des Abgassensors nur in Betriebspunkten des Verbrennungsmotors durchgeführt wird, in denen eine besonders genaue Berechnung des Abgasgrenzwertes oder eine besonders genaue Messung durch den Abgassensor ermöglicht wird.

9. Verfahren nach Anspruch 7 oder 8, **dadurch gekennzeichnet, dass** bei der Mittelwertbildung Werte in Betriebspunkten des Verbrennungsmotors, in denen eine besonders genaue Berechnung des Abgasgrenzwertes oder eine besonders genaue Messung durch den Abgassensor möglich sind, stärker gewichtet werden.

10. Verfahren nach einem der Ansprüche 1 bis 7, **dadurch gekennzeichnet, dass** bei Einsatz eines sammelnden Prinzips für den Abgassensor (30) die berechnete Emission mit einem Abgasvolumenstrom (24) multipliziert und integriert wird.

11. Verfahren nach einem der Ansprüche 1 bis 10, **dadurch gekennzeichnet, dass** eine Überwachung einzelner Komponenten eines Abgasnachbehandlungssystems durchgeführt wird, indem ein Signal eines Abgassensors (30), der im Abgasstrom vor der Komponente des Abgasnachbehandlungssystems angeordnet ist mit dem Signal eines zweiten Abgassensors (30) nach der Komponente verglichen wird und dass bei einer ungenügenden Funktion der Komponente das Fehlersignal (15) abgegeben wird.

12. Verfahren nach einem der Ansprüche 1 bis 10, **dadurch gekennzeichnet, dass** aus dem Vergleich von berechneter Emission (21) und gemessener Emission (31) auf eine Fehlfunktion des Abgassensors (30) geschlossen wird und das Fehlersignal (15) abgegeben wird.
